# EUROPÄISCHE PATENTSCHRIFT

(11) **EP 2 396 639 B1**
(45) Veröffentlichungstag und Bekanntmachung des Hinweises auf die Patenterteilung: **19.11.2014**
(21) Anmeldenummer: 10724996.3
(22) Anmeldetag: 12.02.2010
(51) Int. Cl.: G01N 1/02

(54) **ERMITTLUNG UND LOKALISIERUNG DES SCHIMMELBEFALLS IN INNENRÄUMEN**
DETERMINING AND LOCALIZING MOLD INFESTATION IN INTERIOR SPACES
DÉTERMINATION ET LOCALISATION DE MOISISSURES DANS DES LOCAUX INTÉRIEURS

(30) Priorität: 14.02.2009 DE 102009008883
(43) Veröffentlichungstag der Anmeldung: 21.12.2011
(73) Patentinhaber: Führer, Gerhard, 97267 Himmelstadt (DE)
(72) Erfinder: Führer, Gerhard, 97267 Himmelstadt (DE)
(74) Vertreter: Pöhner, Wilfried Anton
(86) Internationale Anmeldenummer: PCT/DE2010/000164
(87) Internationale Veröffentlichungsnummer: WO 2010/091669

(56) Entgegenhaltungen:
- US-A1- 2002 177 236
- US-A1- 2006 234 382
- US-A1- 2006 292 646
- Gerhard Führer: "Schimmelpilze: Oft unerkannt und meistens unterschätzt" Gemündener Bautage 2004 6. Februar 2004 (2004-02-06), XP002591698 Gefunden im Internet: URL:http://www.peridomus.de/bilder/0602200 4.pdf [gefunden am 2010-07-13]

## Beschreibung

Die Erfindung bezieht sich auf ein Verfahren zur effizienten Ermittlung des Befalls von Innenräumen oder dafür zu verwendender Baustoffe mit Schimmelpilzen und anderen Mikroorganismen durch die Entnahme von Materialproben und der anschließenden Analyse dieser Proben für die Probenentnahme die Orte des Pilzbefalles ermittelt werden.

In Wohn-, Arbeits- und Lagerräumen werden Wände, Decken und Böden sowie die Einrichtungsgegenstände oft mit Schimmelpilzen und anderen Mikroorganismen an der Oberfläche sowie in Rissen, Spalten und Hohlräumen innerhalb der Raumhülle belastet. Sporen und andere partikelartige Bestandteile der Schimmelpilze sowie gasförmige Stoffwechselprodukte der Mikroorganismen und davon abgetrennte, andere Bestandteile wie Schimmelpilzgifte lösen sich von den befallenen Flächen und gelangen über die Raumluft auf die Haut und in die Atemwege der Personen, die sich in den Räumen aufhalten.

Diese mitunter sehr winzigen Bestandteile können bei den betroffenen Personen allergische und toxische Reaktionen bewirken, die von leichtem Unwohlsein, Kopfschmerzen oder Hautbrennen bis zu krankheitsähnlichen Symptomen reichen. Diese Auswirkungen sind für die Betroffenen nicht nur unangenehm und eine Einschränkung ihrer Lebensqualität, sondern durch die damit verbundene Reduzierung ihrer Leistungsfähigkeit auch eine höchst unwillkommene betriebswirtschaftliche und volkswirtschaftliche Belastung.

Deshalb gibt es auf aktuellem Stand der Technik zahlreiche Geräte und Verfahren zur Expositionsabschätzung und zum Nachweis der Belastung, sodass die Schadstoffquellen anschließend beseitigt werden können.

Deutlich sichtbar mit Schimmelpilzen und Mikroorganismen befallenen Oberflächen können vergleichsweise einfacher erkannt und beseitigt werden. Leider sind jedoch meistens auch andere, oft kleine und versteckte Flächenteile in Ecken, Winkeln und Hohlräumen befallen und auf anderen Flächenanteilen nur relativ wenige Schimmelpilze angesiedelt, so dass sämtliche mikrobiellen Belastungen durch eine visuelle Prüfung nicht vollständig identifiziert werden können.

Auf aktuellem Stand der Technik ist es deshalb bekannt, Materialproben zu entnehmen, die chemisch, physikalisch oder und/oder biologisch untersucht werden, damit das Untersuchungsergebnis klarstellt, ob und mit welchen Mikroorganismen in welcher Konzentration der jeweilige Bereich befallen bzw. belastet ist.

Die DE 10 2004 012 105 des Anmelders beschreibt ein Verfahren zur Entnahme von Proben, bei dem zuerst gasförmige Stoffwechselprodukte von Mikroorganismen und andere, Luftgetragene Bestandteile mikrobiologischen Ursprungs aufgenommen werden und zwar aus der Raumluft, aus dem Staub oder aus dem Material der Wände, Decken, Böden und Einrichtungen oder von deren Oberfläche.

Ein Problem dabei ist, dass nur eine Materialprobe eine verbindliche Aussage über den Quellbereich des Befalls ermöglicht, nämlich durch den Ort ihrer Entnahme. Aus der Raumluft und aus dem Staub entnommene Proben können vom Ort des eigentlichen Schimmelbefalls durch Luftströmungen weggeweht worden sein und lassen deshalb nur den Schluss zu, dass der jeweilige Innenraum an irgendeiner Stelle kontaminiert ist. Aber eine genaue Aussage darüber, welcher Teil der Oberfläche oder welche Hohlräume oder welche Risse befallen sind, ist jedoch nicht möglich.

In einem vom Anmelder auf einer Fachtagung gehaltenen Vortrag wird ausgeführt, dass die aufgetretenen Schäden nur durch entsprechende Materialuntersuchungen erfasst werden können. Als einziger Hinweis zu Lokalisierung des Entnahmeorts findet sich die Geruchsprüfung durch den Einsatz eines Schimmelspürhundes.

Natürlich ist es prinzipiell denkbar, von sämtlichen Oberflächen der Raumhülle systematisch Materialproben zu entnehmen und diese zu prüfen. Je nach dem, mit welchem Abstand zueinander die einzelnen Orte einer Probeentnahme gewählt werden, erhöht sich die Wahrscheinlichkeit für einen "Treffer" bei der Untersuchung. Ein solches, systematisches Vorgehen ist jedoch nicht nur sehr zeitaufwändig sondern auch enorm kostenträchtig.

Deshalb hat sich die Erfindung die Aufgabe gestellt, ein Verfahren zur Ermittlung des Befalls von Innenräumen mit Schimmelpilzen oder anderen Mikroorganismen aufzufinden, bei dem mit geringen Kostenund Zeitaufwand eine zuverlässige Aussage über Art und Ort der Kontamination möglich wird.

Als Lösung präsentiert die Erfindung, dass im ersten Schritt durch wenigstens zwei Prüfungen von den vier Prüfarten Geruchsprüfung und/oder Feuchtigkeitsmessung und/oder Temperaturmessung und/oder Messung der Geschwindigkeit und der Richtung von Luftströmungen jeweils ein räumliches Profil der Abweichungen vom jeweiligen Normalwert erstellt wird und im zweiten Schritt für jeden Ort der Prüfung die ermittelten Werte der Abweichung vom Normalwert aus beiden gewählten Prüfarten zu einem Gesamtprofil addiert werden und im dritten Schritt eine Materialprobe zumindest an einem Ort entnommen wird, an dem die Summe der Abweichungen vom Normalwert aus beiden Prüfarten relativ groß ist.

In kurzer Zeit sollen mit geringem Aufwand kontaminierte Bereiche eines Raumes oder eines Baustoffes ausfindig gemacht werden, damit möglichst nur aus den befallenen Bereichen Materialproben entnommen werden und die Entnahme von Proben aus unbelasteten Bereichen reduziert wird.

Die vier von der Erfindung vorgeschlagenen Prüfarten Geruchsprüfung, Feuchtigkeitsmessung, Temperaturmessung und Messung der Geschwindigkeit und der Richtung von Luftströmungen weisen jeweils auf Orte hin, an denen Schimmelpilze und anderen Mikroorganismen gute Lebensbedingungen vorfinden, ihr massenhaftes Auftreten also wahrscheinlich ist. Dort, wo die Abweichung vom Normalwert besonders hoch ist, ist auch die Wahrscheinlichkeit für das Vorhandensein von Schimmelpilzen besonders hoch.

Ein wesentliches Merkmal der Erfindung ist, dass für die Wahl des Ortes zur Entnahme einer Probe nicht nur eine einzige Prüfart, sondern zwei Prüfarten gewählt werden und deren Ergebnisse miteinander verknüpft werden. Dadurch erhöht sich die Wahrscheinlichkeit sehr, mit der - relativ teuren - Entnahme und Analyse einer Materialprobe auch tatsächlich einen unerwünschten Befall nachzuweisen.

Von einem Ort, der nach beiden Prüfkriterien eine sehr hohe Trefferwahrscheinlichkeit erwarten lässt, wird eine Materialprobe entnommen. Es ist auf aktuellem Stand der Technik bekannt, auf welche Art Proben für die jeweiligen Analysen zu entnehmen sind.

Von den vier vorgeschlagenen Prüfarten kann mit einer Geruchsprüfung, also dem Nachweis von geruchsaktiven Verbindungen mikrobiellen Ursprungs in der Raumluft nicht nur deren Vorhandensein nachgewiesen werden, sondern auch der Bereich, aus dem sie stammen. Da die Geruchsemissionen jedoch schon durch ganz geringe Luftbewegungen verwirbelt und weggetragen werden, ist nicht jede befallene Stelle durch ihren Geruch lokalisierbar. Deshalb ist der Nachweis eines Geruchs in der Raumluft auch nicht der eindeutige Hinweis darauf, dass der riechende Bereich von Pilzen befallen ist.

Es ist eine wesentliche Idee der Erfindung, zur Auswahl des Ortes der Probenentnahme weitere Prüfarten vorzuschlagen, mit denen die Trefferwahrscheinlichkeit erhöht wird.

Eine solche Prüfart ist eine Messung der Feuchtigkeit. Weil die meisten, für den Menschen schädlichen Mikroorganismen in Innenräumen auf solchen Bereichen der Fläche leben und sich vermehren, auf denen die Feuchtigkeit verhältnismäßig hoch ist, ist es sinnvoll diejenigen Bereiche zu identifizieren, die sehr viel feuchter sind als der Normalfall.

Die Prüfung sollte Bereiche ausschließen, in denen die Feuchtigkeit bestimmungsgemäß sehr hoch ist, wie z. B. Waschbecken, Badewannen und Aquarien, weil diese Einrichtungen regelmäßig gereinigt und dadurch von den Ansätzen von Schimmelpilzen befreit werden. Falls diese Reinigung und/oder andere Wartung unterbleibt, kann jedoch auch eine solche bestimmungsgemäße Feuchtigkeitskonzentration ein Ort werden, an dem das Auftreten von Schimmelpilzen wahrscheinlich ist.

Im Fokus des erfinderischen Merkmals liegen vor allem diejenigen Flächenbereiche, in denen eine erhöhte Feuchtigkeit eigentlich nicht zu erwarten ist, nicht erwünscht ist und nur durch andere Fehler erzeugt wird. Ein leicht nachvollziehbares Beispiel ist ein undichtes Fallrohr einer Regenrinne, von dem austretendes Regenwasser das Mauerwerk einer Wand so sehr durchfeuchtet hat, dass die Schimmelpilze in diesem Bereich für sie geeignete Lebensbedingungen vorfinden.

Ein anderes Beispiel ist ein Abwasserrohr, das innerhalb einer Wand verläuft und dabei zwar absolut dicht ist - also kein Wasser direkt in das Mauerwerk austreten lässt - aber durch fortwährende Abkühlung des jeweiligen Mauerbereiches dafür sorgt, dass die Luftfeuchtigkeit an dieser Stelle kondensiert und dadurch laufend Feuchtigkeit aus der Raumluft ausgeschieden wird.

Ein weiteres, recht bekanntes Beispiel ist eine Raumecke zwischen zwei Außenwänden. Durch den in diesem Bereich sehr großen Anteil der Außenfläche wird die Innenfläche des Mauerwerkes so weit abgekühlt, dass sich dort durch Kondensation Luftfeuchtigkeit abscheiden kann.

Eine weitere Prüfart zur Auffindung von Orten, an denen die Wahrscheinlichkeit für das Auffinden von Schimmelpilzen sehr hoch ist, ist eine Temperaturmessung. Besonders interessant ist dabei das Auffinden von Bereichen, die kühler sind als die mittlere Temperatur der Raumhülle. Nicht die niedrigen Temperaturen selbst werden von den Schimmelpilzen geschätzt, sondern die Feuchtigkeit aus der Raumluft, die in kühlen Bereichen kondensiert und sich niederschlägt.

Durch diesen Schritt können Bereiche erfasst werden, in denen die Feuchtigkeit noch nicht so hoch ist, dass sie durch eine Feuchtigkeitsmessung erfasst werden kann, aber - z. B. in der Tiefe des Mauerwerks - bereits so hoch ist, dass sich Schimmelpilze dort ansiedeln können. Auch hier ist die bereits erwähnte Raumecke oder das bereits erwähnte Rohr in der Wand ein einleuchtendes Beispiel. Als vierte Prüfart schlägt die Erfindung Messungen der Geschwindigkeit und der Richtung der auf die Raumhülle auftreffenden Luftströmungen vor. Mit dieser Prüfart werden Bereiche erfasst, in denen die Luftströmung zu einer Abkühlung bestimmter Wandbereiche führt, wodurch im nächsten Schritt Luftfeuchtigkeit kondensieren kann und eine Wachstumsgrundlage für die Schimmelpilze bildet.

Denkbar ist auch, dass die Luftströmung andere Materialien einbringt - z. B. als Staub - die sich in Wandbereichen niederschlagen und wie ein Dünger für die Mikroorganismen wirken. Möglich ist es auch, dass die Luft Feuchtigkeit und/oder Schimmelpilze mitbringt, die im Bereich des Aufschlagens auf die Raumhülle zu einer Belastung führen.

Das Ergebnis der beiden, von diesen vier Prüfarten ausgewählten Prüfungen ist ein räumliches Profil der Abweichungen vom jeweiligen Normalwert. Dann werden - im zweiten Schritt - für jeden Ort, an dem geprüft worden ist, die für beide Prüfarten ermittelten Werte der Abweichung vom jeweiligen Normalwert addiert und dadurch die Ergebnisse von beiden Prüfungen miteinander kombiniert. Dort, wo nach zwei Kriterien die Abweichung vom Normwert besonders groß ist, lohnt es sich auch besonders, eine Materialprobe zu entnehmen, da hier die Wahrscheinlichkeit für das Antreffen von Mikroorganismen ebenfalls besonders hoch ist.

Als Variante des erfindungsgemäßen Verfahrens können weitere Proben entnommen und analysiert werden. Zur Entnahme schlägt die Erfindung Orte vor, die im Verhältnis zur Gesamtgröße des zu prüfenden Raumes von den Orten aller vorherigen Probenentnahmen weit entfernt sind und an denen die Summe der Abweichungen vom Normalwert aus beiden Prüfarten höher als in deren näherer Umgebung ist, da auch hier die Wahrscheinlichkeit für das Antreffen von Mikroorganismen hoch ist.

Da es in vielen Fällen ausreicht, nur die Oberfläche eines Raumes auf den Befall mit Schimmelpilzen zu überprüfen, ist es sinnvoll das Profil der Abweichungen vom jeweiligen Normalwert ebenfalls nur für die gesamte Oberfläche eines Innenraums oder eines Baustoffes zu erstellen.

Wenn jedoch auch ein Befall innerhalb der Wände, Decken oder Böden eines Raumes erfasst werden soll, sollte bei den Prüfungen das Profil der Abweichungen vom Normalwert auch für Orte innerhalb der Wände, Decken und Fußböden eines Innenraums oder innerhalb eines Baustoffes erstellt werden. Dabei ist es sinnvoll, die Prüfung nur auf solche Orte zu beschränken, die mechanisch verhältnismäßig einfach zugänglich sind, wie z.B. Hohlräume und Trennfugen, denn dort ist das Auftreten von Schimmel sehr viel wahrscheinlicher als anderswo.

Wenn die Auswahl der beiden von vier Prüfarten nicht durch Kriterien, wie z.B. die Verfügbarkeit der Messgeräte oder spezifische Eigenschaften des Raums, wie z.B. ein nachträglich ausgebautes Dachgeschoss mit zahlreichen Ritzen, vorgegeben ist, kann diese Auswahl auch systematisch durch Vorprüfungen erfolgen. Eine solche Vorprüfung kann in drei oder vier Prüfungsarten z.B. mit reduzierter Messgenauigkeit und/oder mit einer geringeren Anzahl von Prüforten durchgeführt werden. Der Spitzenwert oder der Mittelwert aller dabei gemessenen Abweichungen vom Normalwert ist dann der Selektionsfaktor für die Selektion von zwei Prüfungsarten.

Wenn die Wirtschaftlichkeit bei der Prüfung einen hohen Stellenwert hat, so kann der Selektionsfaktor für jede Prüfart mit einem Preiskorrekturfaktor multipliziert werden, der der Preis einer Prüfung in jeder Prüfart bezogen auf den mittleren Preis einer Prüfung ist.

Falls die Zeitdauer der Prüfung kritisch ist, so kann der Selektionsfaktor für jede Prüfart mit einem Zeitkorrekturfaktor multipliziert werden, der die Zeitdauer einer Prüfung in jeder Prüfart bezogen auf die mittlere Zeitdauer einer Prüfung ist.

In allen Fällen ist es sinnvoll, dass die Orte für eine Prüfung die Schnittpunkte eines gleichmäßig über alle Flächen gelegten Liniennetzes sind. Alternativ können die Prüforte auch in Bereichen mit vorhersehbar höherer Wahrscheinlichkeit für Pilzbewuchs verdichtet und in unkritischen Bereichen weiter voneinander entfernt sein. Es muss jedoch stets gewährleistet werden, dass kein Bereich ausgelassen wird. Nur für die Vorprüfung kann es vertretbar sein, die Prüforte von einem Zufallsgenerator auswählen zu lassen.

Die Effizienz einer Prüfung kann mit einer besonderen Vorrichtung, also einem speziellen Schimmelprüfgerät, gesteigert werden. Vorteilhaft ist z.B., dass es für die gleichzeitige Durchführung von wenigstens zwei Prüfungen zur gleichen Zeit und am gleichen Ort eingerichtet ist.

Sinnvoll ist auch ein Speicher für sämtliche Messergebnisse aller Prüfungsarten und eine Auswerteeinheit zur Errechung des Mittelwertes und/oder zur Anzeige des kleinsten Messwertes und des größten Messwertes mit den zugehörigen Ortskoordinaten. Diese Funktionen könnten z.B. in einen PC mit begrenztem Aufwand implementiert werden und beschleunigen die Prüfung erheblich.

Ein solcher PC könnte auch Ortskoordinaten für die Messungen vorgeben und die Ortskoordinaten der tatsächlich durchgeführten Messungen samt den Messwerten speichern. Idealerweise sind die Ausgänge der jeweiligen Messgeräte direkt mit dem Auswertegerät verbunden. Aber selbst eine nur manuelle Datenübertragung zwischen Messgeräten und Auswertegerät verbessern die Vollständigkeit der Messungen und erhöhen so die Genauigkeit bei der Findung von optimalen Orten zur Probenentnahme.

Zwecks hoher Verfügbarkeit schlägt die Erfindung vor, dass ein Schimmelprüfungsgerät in einem transportablen Gehäuse wenigstens je ein Messgerät für mindestens zwei der verfahrensgemäßen vier Prüfarten aufweist und eine Speicher- und Auswerte-Einheit für die Messwerte integriert ist.

Wenn die erfindungsgemäßen wenigstens zwei Prüfungen durchgeführt sind, ist das Ergebnis eine Vorgabe für wenigstens einen Ort zur Entnahme einer Probe mit einer hohen Trefferwahrscheinlichkeit durch die Abweichungen der jeweilig geprüften Werte vom Normalwert.

Falls die dabei ermittelten Werte jedoch noch keinen eindeutigen Hinweis liefern sollten, oder falls die Trefferwahrscheinlichkeit noch weiter erhöht werden soll, schlägt die Erfindung Bewertungsfaktoren vor, mit denen die ermittelten Abweichungen multipliziert werden. Diese Bewertungsfaktoren basieren auf wiederholbaren Effekten bei bestimmten Messungen in bestimmten Bereichen. Sie können z.B. in Form einer Liste im Auswertegerät enthalten sein. Nach Zuweisung des jeweils zutreffenden Punktes aus der Liste zu einem Prüfergebnis kann das Auswertegerät selbsttätig den Faktor mit dem Messwert multiplizieren.

Für die Feuchtemessung sind die Festsetzungen von Bewertungsfaktoren für die Bereiche von erhöhter Neubaufeuchte und/oder Überschwemmungen und/oder Wasserrohrbrüche und/oder Niederschlägen nach Schäden an Dach oder Außenwand und/oder Löschwasser nach Bränden und/oder undichten Fenstern, Türen oder anderen Öffnungen in der Außenwand und/oder undichten Waschmaschinen, Wäschetrocknern, Wasserkochern, Heizungen und anderen Geräte und/oder undichten Badewannen, Waschbecken, Duschtassen, Toilettenspülungen, Brauchwasserventilen oder anderen Sanitäreinrichtungen und/oder ausgelaufenen Aquarien, Wasserbetten und anderen Wasserbehälter sinnvoll.

Für die Temperaturmessung sind die Festsetzungen von Bewertungsfaktoren für die Bereiche zum Duschen und anschließendem Lüften und/oder Kochen mit oder ohne Dunstabzugshaube und/oder Trocknen von Wäsche in Wohnräumen vorteilhaft.

Ebenfalls für die Temperaturmessung wird die Festsetzung von Bewertungsfaktoren für die Bereiche mit Möbeln an Außenwänden und/oder durch Einlassen von Luft aus wärmeren Räumen erwärmten Zimmern und/oder Gegenständen in Kästen direkt unterhalb von regelmäßig genutzten Matratzen und/oder Wandbildern oder Wandspiegeln direkt an dünnen Außenwänden empfohlen.

Sowohl bei der Temperaturmessung als auch bei der Feuchtemessung und bei der Luftströmungserfassung sind Bewertungsfaktoren für die Bereiche mit Wärmebrücken an Fensterlaibungen, Gebäudeecken, Betonstürzen, Balkonträgern, Auflagern von Gebäudedecken, ungedämmten Decken über Kellern, Garagen oder Durchfahrten, Fenstern mit Einscheibenverglasung und andere Wärmebrücken und/oder mit Isolierschichten in Böden, Wänden und Decken, die über offene Randfugen, Kabelrohre und Steckdosen oder ähnliches mit dem Innenraum in Verbindung stehen sowie in Raumecken von Innenräumen eine Steigerung der Effizienz bei der Auffindung des Ortes mit einer hohen Wahrscheinlichkeit des Schimmelbefalls.

Für die Durchführung der Feuchtigkeitsmessung schlägt die Erfindung Messgeräte wie Hygrometer, Widerstandsmessgeräte oder Feuchtigkeitssonden bis hin zu Trockenschränken für eine Feuchtigkeitsmessung von Proben nach der Darr-Methode vor.

Für die Temperaturmessung werden Messgeräte wie geeichte Röhrchen mit expandierender Flüssigkeit, Temperaturfühler mit elektronischer Auswertung, Infrarotthermometer bis hin zur Thermografie- oder Wärmebildkamera genannt.

Zur Messung der Geschwindigkeit und der Richtung strömender Luft werden als Messgeräte Anemometer und/oder Rauch- und Nebelwerfer erwähnt.

Bei der Durchführung der Prüfung können als Sensoren zur Geruchserfassung Gaschromatographie-Massenspektrometer (GC-MS) verwendet werden. Derartige Geräte sind besonders gut geeignet, um die Konzentrationen von Gasen in Bodennähe zu erfassen, insbesondere in der Nähe von Spalten im Fußboden, durch die Stoffwechselprodukte von darunter befindlichen Organismen in erster Linie austreten. Dadurch finden Gasveränderungen statt, die sowohl qualitativ als auch quantitativ durch das GC-MS Analysegerät erfassbar sind.

Im ersten Ansatz würde es sogar ausreichen, wenn die Stoffwechselprodukte nur summarisch erfasst würden ohne die Konzentration der einzelnen Komponenten zu kennen.

Deshalb sind auch Flammenionisationsdetektoren(FID) geeignet, die bekanntlich einige Belastungen der Luft nur als Summenwert ermitteln können. Auch sind die Konzentrationen, die durch einen FID erfassbar sind, vergleichsweise hoch. Trotz dieser vergleichsweise hohen Nachweisgrenze und der zum Teil nur summarischen Erfassung ist ein FID dennoch zur Aufstellung eines Profils geeignet.

Hinausgehend über GC-MS und FID sind grundsätzlich alle Detektoren geeignet, die Gase in geringen Konzentrationen nachzuweisen vermögen. Derartige elektronische Geruchssensoren werden auch als "elektronische Nasen" bezeichnet.

Einsetzbar sind auch das Riechorgan von entsprechend geschulten Schimmelspürhunden und/oder das Riechorgan von Menschen.

Mit Hilfe dieser Detektoren lassen sich Rückschlüsse ziehen und ein entsprechendes Belastungsprofil erstellen.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:

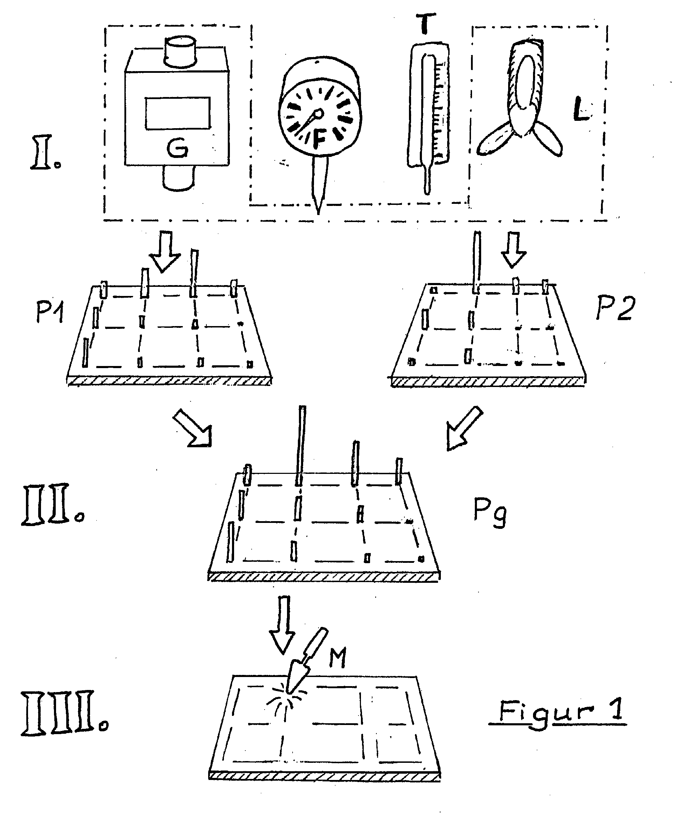

Figur 1 Ablauf der Lokalisierung eines Schimmelbefalls

In Figur 1 ist eine schematische Übersicht über die drei Schritte I bis III bei der effizienten Auswahl des Ortes zur Entnahme einer Materialprobe für die Analyse auf Schimmelpilzbefall wiedergegeben. In der obersten Zeile sind vier Messgeräte für die Durchführung der vier von der Erfindung vorgeschlagenen Prüfarten dargestellt: Für die Geruchsprüfung G ein elektronischer Geruchssensor, für die Feuchtigkeitsmessung F ein Hygrometer, für die Temperaturmessung T ein Thermometer und für die Messung der Geschwindigkeit und der Richtung von Luftströmungen L ein Anemometer mit einem Propeller der vom zu messenden Luftstrom gedreht wird.

Eine strichpunktierte Linie zeigt an, welche beiden der vier möglichen Prüfarten in diesem Beispiel ausgewählt worden sind: Es sind die Geruchsprüfung G und die Messung der Geschwindigkeit und der Richtung von Luftströmungen L.

In der zweiten Zeile der Figur 1 ist für jede Prüfart ein Teil der überprüften Fläche dargestellt. Das für alle gewählten Prüforte ermittelte Profil P1 ,P2 der Abweichung vom jeweiligen Normalwert zeigt links das Profil P1 für die Geruchsmessung G und rechts das Profil P2 für die Messung der Luftströmung L.

Für den jeweils ermittelten Wert der Abweichung sind in jedem Prüfort Balken von entsprechender Länge eingetragen. Dabei zeigt sich, dass in beiden dargestellten Flächenausschnitten nur Abweichungen größer als Null oder Null gemessen worden sind. Bereiche mit einer negativen Abweichung vom Normalwert sind nicht dargestellt.

In Figur 1 ist dargestellt, wie im Schritt II die Profile P1 und P2 miteinander kombiniert werden, indem die Messwerte aus beiden Prüfarten addiert werden.

Dabei zeigt sich, dass von allen dargestellten Prüforten der zweite Punkt von links in der hintersten Reihe der Prüforte mit der insgesamt größte Abweichung vom Normalwert ist. Nach dem Profil P1 der Geruchsprüfung hätte hingegen der dritte Punkt von links die größte Abweichung gezeigt. Dieses Ergebnis wurde jedoch durch das Profil P2 der Luftströmungsmessung verändert.

Figur 1 zeigt, wie deshalb im dritten Schritt vom zweiten Prüfpunkt von links in der hintersten Reihe eine Materialprobe M entnommen wird. Der darauf folgende Schritt der Analyse ist in Figur 1 nicht dargestellt.

Jeder Schritt dient der Lokalisierung von Punkten, an denen die Wahrscheinlichkeit des Auftretens von Schimmelpilzen deutlich höher ist als an anderen Orten. Dadurch wird der erforderliche Prüf-und Messaufwand deutlich reduziert und somit die Wirtschaftlichkeit gesteigert.

### Bezugszeichen

- F: Prüfart: Feuchtigkeitsmessung
- G: Prüfart: Geruchsprüfung
- M: Materialprobe
- L: Prüfart: Messungen der Geschwindigkeit und der Richtung von Luftströmungen
- P1: Profil der Abweichungen vom Normalwert über die Fläche für die erste Prüfart G oder F oder T oder L
- P2: Profil der Abweichungen vom Normalwert über die Fläche für die zweite Prüfart G oder F oder T oder L
- Pg: Profil der Abweichungen vom Normalwert über die Fläche für die erste und die zweite Prüfart gemeinsam
- T: Prüfart: Temperaturmessung

## Patentansprüche

1. Verfahren zur effizienten Ermittlung des Befalls von Innenräumen oder dafür zu verwendender Baustoffe mit Schimmelpilzen und anderen Mikroorganismen durch die Entnahme von Materialproben (M) und der anschließenden Analyse dieser Proben, wobei für die Probenentnahme die Orte des Pilzbefalles ermittelt werden, indem wenigstens eine der 4 nachfolgenden Prüfarten zur Anwendung kommt, **dadurch gekennzeichnet, dass**
- im ersten Schritt durch wenigstens zwei Prüfungen von den vier Prüfarten
- Geruchsprüfung (G) und/oder
- Feuchtigkeitsmessung (F) und/oder
- Temperaturmessung (T) und/oder
- Messungen der Geschwindigkeit und der Richtung von Luftströmungen (L)
jeweils ein räumliches
Profil (P1,P2) der Abweichungen vom jeweiligen Normalwert erstellt wird
und
- im zweiten Schritt für jeden Ort der Prüfung die ermittelten Werte der Abweichung vom Normalwert aus beiden gewählten Prüfarten zu einem Gesamtprofil (Pg) addiert werden
und
- im dritten Schritt eine Materialprobe (M) zumindest an einem Ort entnommen wird, an dem die Summe der Abweichungen vom Normalwert aus beiden Prüfarten relativ groß ist.

2. Ermittlung des Schimmelbefalls nach Anspruch 1,
**dadurch gekennzeichnet,**
**dass** als vierter und weiterer Schritt je eine Materialprobe (M) von Orten entnommen wird, die im Verhältnis zur Gesamtgröße des zu prüfenden Raumes von den Orten aller vorherigen Probenentnahmen weit entfernt sind und an denen die Summe der Abweichungen vom Normalwert aus beiden Prüfarten höher als in deren unmittelbarer Umgebung ist.

3. Ermittlung des Schimmelbefalls nach einem der vorhergehenden Ansprüche, **dadurch gekennzeichnet, dass** das Profil der Abweichungen vom jeweiligen Normalwert für die gesamte Oberfläche eines Innenraums oder eines Baustoffes erstellt wird.

4. Ermittlung des Schimmelbefalls nach Anspruch 3,
**dadurch gekennzeichnet,**
**dass** das Profil der Abweichungen auch für Orte innerhalb der Wände, Decken und Fußböden eines Innenraums oder innerhalb eines Baustoffes erstellt wird, die mechanisch verhältnismäßig einfach zugänglich sind, wie z. B. Hohlräume und Trennfugen.

5. Ermittlung des Schimmelbefalls nach einem der vorhergehenden Ansprüche, **dadurch gekennzeichnet,**
**dass** zur Auswahl der wenigstens zwei von vier Prüfungsarten eine Vorprüfung in drei oder vier Prüfungsarten
- mit reduzierter Messgenauigkeit und/oder
- einer geringeren Anzahl von Prüforten durchgeführt wird und der Spitzenwert oder der Mittelwert aller dabei gemessenen Abweichungen vom Normalwert der Selektionsfaktor für die Selektion von zwei Prüfungsarten ist.

6. Ermittlung des Schimmelbefalls nach Anspruch 5,
**dadurch gekennzeichnet,**
**dass** der Selektionsfaktor für jede Prüfart mit einem Preiskorrekturfaktor multipliziert wird, der der Preis einer Prüfung in jeder Prüfart bezogen auf den mittleren Preis einer Prüfung ist.

7. Ermittlung des Schimmelbefalls nach Anspruch 5, **dadurch gekennzeichnet,**
**dass** der Selektionsfaktor für jede Prüfart mit einem Zeitkorrekturfaktor multipliziert wird, der die Zeitdauer einer Prüfung in jeder Prüfart bezogen auf die mittlere Zeitdauer einer Prüfung ist.

8. Ermittlung des Schimmelbefalls nach einem der vorhergehenden Ansprüche, **dadurch gekennzeichnet,**
**dass** die Orte für eine Prüfung die Schnittpunkte eines gleichmäßig über alle Flächen gelegten Liniennetzes sind.

9. Ermittlung des Schimmelbefalls nach einem der vorhergehenden Ansprüche, **dadurch gekennzeichnet,**
**dass** die Orte für die Vorprüfung von einem Zufallsgenerator wählbar sind.

10. Ermittlung des Schimmelbefalls nach einem der vorhergehenden Ansprüche, **dadurch gekennzeichnet, dass** wenigstens zwei Prüfungen zur gleichen Zeit und am gleichen Ort gleichzeitig durchgeführt werden.

11. Ermittlung des Schimmelbefalls nach einem der vorhergehenden Ansprüche, **dadurch gekennzeichnet, dass**
- sämtliche Messergebnisse aller Prüfungsarten
und
- einem Speicher einer Auswerteeinheit,
- zur Errechung des Mittelwertes und/oder
- zur Anzeige des kleinsten Messwertes und des größten Messwertes mit den zugehörigen Ortskoordinaten zugeführt werden.

12. Ermittlung des Schimmelbefalls nach Anspruch 1, **dadurch gekennzeichnet, dass**
Ortskoordinaten für die Messung vorgegeben sind und
die Ortskoordinaten der durchgeführten Messungen samt den Messwerten gespeichert werden.

13. Ermittlung des Schimmelbefalls nach Anspruch 1, **dadurch gekennzeichnet, dass**
ein transportables Gehäuse eingesetzt wird, in das
- wenigstens je ein Messgerät für mindestens zwei der verfahrensgemäßen vier Prüfarten und
- eine Speicher- und Auswerte-Einheit für die Messwerte integriert ist.

14. Ermittlung des Schimmelbefalls nach einem der vorhergehenden Ansprüche,
**dadurch gekennzeichnet, dass** zur Bewertung der durch Feuchtemessung (F) ermittelten Abweichungen Bewertungsfaktoren wegen einer prinzipiell abweichenden Wahrscheinlichkeit des Pilzbefalls für die Bereiche von
- erhöhter Neubaufeuchte und/oder
- Überschwemmungen und/oder
- Wasserrohrbrüchen und/oder
- Niederschlägen nach Schäden an Dach oder Außenwand und/oder
- Löschwasser nach Bränden und/oder
- undichten Fenstern, Türen oder anderen Öffnungen in der Außenwand und/oder
- undichten Waschmaschinen, Wäschetrocknern, Wasserkochern, Heizungen und anderen Geräte und/oder
- undichten Badewannen, Waschbecken, Duschtassen, Toilettenspülungen, Brauchwasserventilen oder andere Sanitäreinrichtungen und/oder
- ausgelaufenen Aquarien, Wasserbetten und anderen Wasserbehältern
eingesetzt werden.

15. Ermittlung des Schimmelbefalls nach einem der vorhergehenden Ansprüche, **dadurch gekennzeichnet, dass** zur Bewertung der durch Temperaturmessung (T) ermittelten Abweichungen Bewertungsfaktoren wegen einer prinzipiell abweichenden Wahrscheinlichkeit des Pilzbefalls für die Bereiche zum
- Duschen und anschließendem Lüften und/oder
- Kochen mit oder ohne Dunstabzugshaube und/oder
- Trocknen von Wäsche in Wohnräumen
eingesetzt werden.

16. Ermittlung des Schimmelbefalls nach einem der vorhergehenden Ansprüche, **dadurch gekennzeichnet, dass** zur Bewertung der durch Temperaturmessung (T) ermittelten Abweichungen Bewertungsfaktoren wegen einer prinzipiell abweichender Wahrscheinlichkeit des Pilzbefalls für die Bereiche mit
- Möbeln an Außenwänden und/oder
- durch Einlassen von Luft aus wärmeren Räumen beheizten anderen Zimmern und/oder
- Gegenständen in Kästen unterhalb Matratzen und/oder
- Wandbildern oder Wandspiegeln direkt an dünnen Außenwänden eingesetzt werden.

17. Ermittlung des Schimmelbefalls nach einem der vorhergehenden Ansprüche, **dadurch gekennzeichnet, dass** zur Bewertung der durch Temperaturmessung (T) und/oder Feuchtemessungen (F) und/oder die Luftströmungserfassung (L) ermittelten Abweichungen Bewertungsfaktoren wegen einer prinzipiell abweichenden Wahrscheinlichkeit des Pilzbefalls für die Bereiche
- mit Wärmebrücken an Fensterlaibungen, Gebäudeecken, Betonstürzen, Balkonträgern, Auflagern von Gebäudedecken, ungedämmten Decken über Kellern, Garagen oder Durchfahrten, Fenstern mit Einscheibenverglasung und andere Wärmebrücken und/oder
- mit Isolierschichten in Böden, Wänden und Decken, die über offene Randfugen, Kabelrohre und Steckdosen oder ähnliches mit dem Innenraum in Verbindung stehen und/oder
- in Raumecken von Innenräumen
eingesetzt werden.

18. Ermittlung des Schimmelbefalls nach einem der vorhergehenden Ansprüche, **dadurch gekennzeichnet, dass** als Sensoren zur Geruchserfassung
- Gaschromatografie-Massenspektrometer (GC-MS) und/oder
- Flammenionisationsdetektoren (FID) und/oder
- elektronische Geruchssensoren, sog. "elektronische Nasen",
und/oder
- das Riechorgan von entsprechend geschulten Schimmelspürhunden und/oder
- das Riechorgan von Menschen
eingesetzt werden.

## Claims

1. Method for the efficient determination of the infestation of interior rooms, or of construction materials to be used for such rooms, with mould and other microorganisms, by means of the removal of material samples (M) and the subsequent analysis of these samples, for the sample removal the locations of the mould infestation being determined in that at least one of the four following test types are applied, **characterised**
- **in** the first step, by at least two tests of the four test types comprising
- odour testing (O) and/or
- moisture testing (M) and/or
- temperature measurement (T) and/or
- measurements of the velocity and the direction of air flows (A) a spatial profile (P1, P2) of the deviations from the normal value in each case is drawn up
and
- In the second step, for each location of the test, the determined values of the deviation from the normal value from both selected test types are added to provide an overall profile (Pg)
and
- In the third step a material sample (M) is removed at at least one location, at which the sum of the deviations from the normal value from both types of test is relatively large.

2. Determination of the mould infestation according to claim 1, **characterised in that**, as a fourth and further step, a material sample (M) is taken from locations that, in relation to the overall size of the space to be tested, are a long way from the locations of all previous samplings and at which the total of the deviations from the normal value from both test types are higher than in the immediate environment thereof.

3. Determination of the mould infestation according to one of the preceding claims, **characterised in that** the profile of the deviations from, in each case, the normal value for the total surface area of an interior room or of a construction material is drawn up.

4. Determination of the mould infestation according to claim 3, **characterised in that** the profile of the deviations is also drawn up for locations within the walls, ceilings and floors of an interior room or within a construction material that are mechanically relatively easily accessible, such as, for example, cavities and separating joints.

5. Determination of the mould infestation according to one of the preceding claims, **characterised in that**, for selection of the at least two of four test types, a preliminary test in three or four test types is performed
- with reduced measurement accuracy and/or
- with a smaller number of test locations, and
the selection factor for the selection of two test types is the peak value or the mean value of all the deviations from the normal value that are thereby measured.

6. Determination of the mould infestation according to claim 5, **characterised in that** the selection factor for each type of test is multiplied by a price correction factor, which is the price of a test in each type of test based on the mean price of a test.

7. Determination of the mould infestation according to claim 5, **characterised in that** the selection factor for each type of test is multiplied by a time correction factor, which is the time duration of a test in each test type related to the average time duration of a test.

8. Determination of the mould infestation according to one of the preceding claims, **characterised in that** the locations for a test are the intersections of a linear network laid uniformly over all surfaces.

9. Determination of the mould infestation according to one of the preceding claims, **characterised in that** the locations for the preliminary test can be selected by a random generator.

10. Determination of the mould infestation according to one of the preceding claims, **characterised in that** at least two tests are performed simultaneously at the same time and at the same location.

11. Determination of the mould infestation according to one of the preceding claims, **characterised in that**
- all the measurement results of all test types are fed
- to a storage device of an evaluation unit
- for calculating the mean value and/or
- for displaying the smallest measurement value and the largest measurement value with the associated location coordinates.

12. Determination of the mould infestation according to claim 1, **characterised in that** location coordinates for the measurements are preset and that the location coordinates of the performed measurements are stored together with the measurement values.

13. Determination of the mould infestation according to claim 1, **characterized in that** a portable housing is used, in which
- at least one measurement device for at least two of the four test types according to the process and
- a storage and evaluation unit for the measurement values are integrated.

14. Determination of the mould infestation according to one of the preceding claims, **characterised in that**, for assessing the deviations determined by moisture measurement (F), because of an, in principle, deviating probability of mould infestation, assessment factors for the areas of
- increased new construction moisture and/or
- flooding and/or
- water pipe fractures and/or
- precipitation after damage to the roof or exterior wall and/or
- fire extinguishing water after fires and/or
- leaky windows, doors or other openings in the outer wall and/or
- leaky washing machines, laundry dryers, kettles, heating and other equipment and/or
- leaky bathtubs, wash basins, shower basins, toilet flushes, service water valves or other sanitary fittings and/or
- leaked aquaria, water beds and other water containers
are applied.

15. Determination of the mould infestation according to one of the preceding claims, **characterised in that**, for assessing the deviations determined by temperature measurement (T), assessment factors are used because of the, in principle, deviating probability of mould infestation for the areas for
- showering and subsequent ventilation and/or
- cooking with or without a fume extractor hood and/or
- drying of laundry in residential rooms
are applied.

16. Determination of the mould infestation according to one of the preceding claims, **characterised in that**, for assessing the deviations determined by temperature measurement (T), because of the, in principle, deviating probability of mould infestation, assessment factors for the areas with
- furniture against exterior walls and/or
- other rooms heated by ingress of air from warmer rooms and/or
- objects in boxes below mattresses and/or wall pictures or wall mirrors directly against thin outer walls
are applied.

17. Determination of the mould infestation according to one of the preceding claims, **characterised in that**, for assessing the deviations determined by temperature measurement (T) and/or moisture measurements (F), and/or air flow recording (L), because of the, in principle, deviating probability of mould infestation, assessment factors for the areas
- with heat bridges on window reveals, building corners, concrete lintels, balcony supports, supports for building ceilings, uninsulated ceilings above cellars, garages or passageways, windows with single glazing and other heat bridges and/or
- with insulation layers in floors, walls and ceilings, that are in contact with the interior room via open edge joints, cable ducts and plug sockets or the like and/or
- in corners of interior rooms
are applied.

18. Determination of the mould infestation according to one of the preceding claims, **characterised in that**, as sensors for odour detection,
- gas chromatography mass spectrometer (GC-MS) and/or
- flame ionization detectors (FID) and/or
- electronic odour sensors, so-called "electronic noses" and/or
- the olfactory organ of appropriately trained mould detection dogs and/or
- the olfactory organ of humans are used.

## Revendications

1. Procédé destiné à déterminer de façon efficace l'attaque de pièces intérieures ou de matériaux de construction devant être utilisés dans ces dernières par des champignons et autres microorganismes au moyen d'un prélèvement d'échantillons de matériaux (M) suivi de l'analyse de ces échantillons, sachant que ce sont les points d'attaque des champignons qui sont choisis pour le prélèvement des échantillons, **caractérisé par le fait**
- **que** dans une première étape, deux tests sur les quatre types de tests que sont
o le test d'odeur (O) et/ou
o la mesure de l'humidité (H) et/ou
o la mesure de température (T) et/ou
o les mesures de la vitesse et la direction de courants d'air (A),
qui sont réalisés afin d'établir à chaque fois un profil spatial (P1, P2) des écarts par rapport à la valeur normale respective,
- les valeurs déterminées de l'écart par rapport à la valeur normale étant, dans une deuxième étape, additionnées de manière à former un profil complet (Pt),
- un échantillon de matériau (M) étant, dans une troisième étape, prélevé au moins en un endroit où le total des écarts par rapport à la valeur normale obtenus à partir des deux types de tests est relativement grand.

2. Détermination de l'attaque de champignons selon la revendication 1, **caractérisée par le fait que** la quatrième étape, l'étape suivante, consiste à prélever à chaque fois un échantillon de matériau de la pièce en des endroits qui sont, par rapport à la taille totale de la pièce à tester, très éloignés des lieux de tous les prélèvement précédents et auxquels le total des écarts par rapport à la valeur normale des deux types de tests est supérieur à celui de leur environnement immédiat.

3. Détermination de l'attaque de champignons selon une des revendications précédentes, **caractérisée par le fait que** le profil des écarts par rapport à la valeur normale respective pour l'ensemble de la surface d'une pièce intérieure ou d'un matériau de construction est établi.

4. Détermination de l'attaque de champignons selon la revendication 3, **caractérisée par le fait que** le profil des écarts est également établi pour des endroits situés à l'intérieur des murs, plafonds et sols d'une pièce intérieure ou à l'intérieur d'un matériau de construction qui sont relativement facilement accessibles en termes mécaniques, comme par exemple des cavités et des joints de séparation.

5. Détermination de l'attaque de champignons selon une des revendications précédentes, **caractérisée par le fait que**, pour sélectionner les deux types de tests parmi quatre, un test préalable est réalisé
- avec une précision de mesure réduite et/ou
- un nombre réduit d'endroits de tests,
la valeur de pic ou la valeur moyenne de tous les écarts mesurés par rapport à la valeur normale représentant le facteur de sélection pour la sélection de deux types de tests.

6. Détermination de l'attaque de champignons selon la revendication 5, **caractérisée par le fait que** le facteur de sélection pour chaque type de test est multiplié par un facteur de correction du prix qui est, pour chaque type de test, le prix du test par rapport au prix moyen.

7. Détermination de l'attaque de champignons selon la revendication 5, **caractérisée par le fait que** le facteur de sélection pour chaque type de test est multiplié par un facteur de correction du temps qui est, pour chaque type de test, la durée par rapport à la durée moyenne d'un test.

8. Détermination de l'attaque de champignons selon une des revendications précédentes, **caractérisée par le fait que** les endroits destinés à un test sont les points de croisement d'un réseau de lignes disposé de façon uniforme sur l'ensemble des surfaces.

9. Détermination de l'attaque de champignons selon une des revendications précédentes, **caractérisée par le fait que** les endroits destinés à un test préalable peuvent être choisis par un générateur de hasard.

10. Détermination de l'attaque de champignons selon une des revendications précédentes, **caractérisée par le fait qu'**au moins deux tests sont exécutés simultanément au même moment et au même endroit.

11. Détermination de l'attaque de champignons selon une des revendications précédentes, **caractérisée par le fait que**
- l'ensemble des résultats de mesure de tous les types de tests
et
- la mémoire d'une unité d'évaluation,
• destiné à atteindre la valeur moyenne et/ou
• destiné à afficher la plus petite valeur de mesure et de la plus grande valeur de mesure
sont alimentés par les coordonnées correspondantes.

12. Détermination de l'attaque de champignons selon la revendication 1, **caractérisée par le fait que**
les coordonnées de lieu pour la mesure sont prescrites à l'avance et que les coordonnées de lieu des mesures effectuées sont sauvegardées en mémoire avec l'ensemble des valeurs de mesure.

13. Détermination de l'attaque de champignons selon la revendication 1, **caractérisée par le fait**
**qu'**un boîtier transportable est utilisé, dans lequel sont intégrés
- au moins un appareil de mesure pour au moins deux des types de tests selon le procédé et
- une unité de mémoire et d'évaluation pour les valeurs de mesure.

14. Détermination de l'attaque de champignons selon une des revendications précédentes, **caractérisée par le fait que**, pour évaluer les écarts détectés par la mesure de l'humidité (H), on recourt à des facteurs d'évaluation sur la base d'une vraisemblabilité principalement divergente de l'attaque de champignons pour les domaines
- d'une humidité accrue de construction neuve et/ou
- d'inondations et/ou
- des ruptures de tuyaux d'eau et/ou
- des précipitations après des dégâts sur le toit ou le mur extérieur
et/ou
- de l'eau d'extinction après des incendies et/ou
- des fenêtres, des portes ou autres ouvertures non étanches dans le mur extérieur et/ou
- des machines à laver, lavabos, sèche-linge, bouilloires et autres récipients d'eau non étanches et/ou
- des baignoires, des lavabos, des receveurs de douche, des chasses d'eau, des vannes d'eaux usées ou d'autres installations sanitaires
et/ou
- des aquariums, des lits à eau et autres récipients d'eau ayant débordé.

15. Détermination de l'attaque de champignons selon une des revendications précédentes, **caractérisée par le fait que**, pour évaluer les écarts déterminés par la mesure de la température (T), on recourt à des facteurs d'évaluation sur la base d'une vraisemblabilité principalement divergente de l'attaque de champignons pour les domaines concernant
- les douches et les ventilateurs raccordés et/ou
- les cuisinières avec ou sans hotte d'extraction de vapeur et/ou
- des sèche-linge dans des pièces d'habitation.

16. Détermination de l'attaque de champignons selon une des revendications précédentes, **caractérisée par le fait que**, pour évaluer les écarts déterminés par la mesure de la température (T), on recourt à des facteurs d'évaluation sur la base d'une vraisemblabilité principalement divergente de l'attaque de champignons pour les domaines concernant
- des meubles sur des murs extérieurs et/ou
- des cuisinières avec ou sans hotte d'extraction de vapeur et/ou
- d'autres pièces chauffées par la pénétration d'air provenant de pièces plus chaudes et/ou
- des objets situés dans des boîtiers en-dessous de matelas et/ou
- des peintures murales ou des miroirs muraux directement sur des murs extérieurs minces.

17. Détermination de l'attaque de champignons selon une des revendications précédentes, **caractérisée par le fait que**, pour évaluer les écarts déterminés par la mesure de la température (T) et/ou les mesures d'humidité (H) et/ou l'enregistrement des courants d'air (A), on recourt à des facteurs d'évaluation sur la base d'une vraisemblabilité principalement divergente de l'attaque de champignons pour les domaines concernant
- des ponts thermiques sur des ouvertures de fenêtres, coins de bâtiments, des linteaux en béton, des supports de balcon, des supports de coins de bâtiments, des plafonds non isolés par-dessus de caves, de garages ou de passages de voitures, des fenêtres avec vitrage à une vitre et autres ponts thermiques et/ou
- avec des couches d'isolation dans des sols, des murs et des plafonds qui sont en liaison avec la pièce intérieure par l'intérieur d'ouvertures ouvertes, gaines de câbles et prises ou autres et/ou
- dans des coins de pièces intérieures.

18. Détermination de l'attaque de champignons selon une des revendications précédentes, **caractérisée par le fait qu'**on recourt, en tant que capteurs destinés à la détection des odeurs, à des
- spectromètres de masse de chromatographie en phase gazeuse et/ou
- des capteurs électroniques d'odeur, ce qu'on appelle des « nez électroniques » et/ou
- l'organe olfactif de chiens formés en conséquence à la détection de champignons et/ou
- l'organe olfactif d'êtres humains.
